# EUROPÄISCHE PATENTSCHRIFT

(11) **EP 1 285 724 B1**
(45) Veröffentlichungstag und Bekanntmachung des Hinweises auf die Patenterteilung: **25.04.2007**
(21) Anmeldenummer: 02015623.8
(22) Anmeldetag: 16.07.2002
(51) Int. Cl.: B23Q 11/00, B23Q 11/10, B23Q 1/01

(54) **Maschine oder Anlage mit einem Kanal und Verfahren zur Montage eines Kanals**
Machine or installation with a conduit and a method of assembly of a conduit
Machine ou installation avec un canal et procédé de montage d'un canal

(30) Priorität: 27.07.2001 DE 10136558
(43) Veröffentlichungstag der Anmeldung: 26.02.2003
(73) Patentinhaber: Grob-Werke GmbH & Co. KG, 87719 Mindelheim (DE)
(72) Erfinder: Kienle, Anton, 87775 Salgen (DE); Groitl, Werner, 87778 Stetten (DE)
(74) Vertreter: Pfister, Stefan Helmut Ulrich

(56) Entgegenhaltungen:
- EP-A- 0 063 315
- EP-A- 0 949 044
- WO-A-02/22273
- US-A- 1 926 997

## Beschreibung

Die Erfindung betrifft eine Maschine oder Anlage mit mindestens einem Kanal beziehungsweise Kanalprofil zur Ableitung flüssiger Medien, insbesondere Kühl- oder Spülflüssigkeiten, das in einen Maschinenständer eingebaut wird, und wobei zwischen dem Maschinenständer und dem Kanalprofil eine Dichtung angeordnet ist (siehe z.B. EP-A-0949044).

In modernen Transferstraßen, Bearbeitungszentren, Maschinen oder Anlagen befindet sich unterhalb des Bearbeitungsbereiches ein Kanal, in welchem das Kühlmittel beziehungsweise Spülmittel abtransportiert wird. Im Kühl- beziehungsweise Spülmittel sind Abriebspäne und so weiter beinhaltet, die durch das Kühl- beziehungsweise Spülmittel auch weggeschwemmt werden müssen. Die Kühl- und Spülmittel sind in aller Regel auch sehr aggresiv, so daß ein Austreten aus der Maschine oder Anlage verhindert werden muß.

Insbesondere im Automobilbereich sind Bearbeitungshallen bekannt, die peinlich sauber gehalten sind. Man fordert selbstverständlich auch von den Bearbeitungszentren, daß diese entsprechend dicht sind, damit an diesen keine Flüssigkeit austreten kann.

Der Aufbau ist in der Regel so, daß in dem Maschinenständer ein Kanalprofil eingebaut wird, welches gegenüber dem Maschinenständer durch entsprechende Spritz- oder Leitbleche geschützt ist. Es ist zu beachten, daß das Kühl- beziehungsweise Spülmittel nicht nur abtropft, sondern auch unter Umständen mit einigen Schwung in den Kanal gespritzt wird und dann entsprechend an der Seite des Maschinenständers die Gefahr besteht, daß das Kühl- beziehungsweise Spülmittel hochspritzt und austritt. Die gleiche Problematik existiert auch beim Verbinden mehrerer Maschinen- oder Anlagenteile der zuvor geschilderten Gattung an den Verbindungsstellen zwischen diesen Maschinen- oder Anlagenteilen sowie an den Verbindungsstellen der daran zu montierenden Kanalprofile.

Aus dem Stand der Technik sind dazu schon Abdichtungen zwischen dem Kanalprofil und der Maschine beziehungsweise Anlage bekannt.

Bei einer ersten bekannten Ausgestaltung wird an dem oberen Rand einer Blechrinne, die den Kanal bildet, ein U-Profil angeordnet, in welches ein aufblasbarer Schlauch eingelegt wird. Dieser Schlauch verdeckt dann den Spalt, der zwischen der Rinne und dem Maschinengestell existiert. Nachteilig bei dieser Ausgestaltung ist, daß der Schlauch beschädigt werden kann. Er kann aber auch undicht werden beziehungsweise der Druck, der benötigt wird um den Schlauch aufzublasen, muß regelmäßig kontrolliert werden. Ein zu hoher Druck in dem Schlauch kann auch die Blechkonstruktion der Rinne beziehungsweise des Kanals beschädigen. Durch zu hohen Druck innerhalb des Schlauches ist es möglich, daß sich die Blechteile der Blechkonstruktion verbiegen. Weiter ist dabei zu beachten, daß bei Blechkonstruktionen scharfe Kanten existieren, wodurch ein weiteres gewisses Risiko der Verletzung des Schlauches besteht.

Bei einer anderen bekannten Lösung des Standes der Technik wird auf den oberen, leistenartigen Rand ein Dichtungsprofil aufgesetzt, welches den Spalt zwischen Maschinenbett und Rinne verdecken soll. Die Montage der Dichtung mußte bisher erfolgen, wenn die Rinne unter dem Maschinenbett eingebaut war. Nachteilig bei dieser Lösung ist, daß dieser Bereich äußerst schlecht erreichbar ist. Die Arbeiten zur Montage der Dichtung sind zudem sehr erschwerlich und auch schlecht kontrollierbar, da der Bereich nach der Montage nicht auf Sicht kontrolliert werden kann. Damit ist eine Kontrolle, ob die Dichtung auch sicher aufgebaut ist beziehungsweise an der korrekten Stelle platziert ist, nicht möglich.

Eine Abdichtung ist auch deshalb notwendig, da nicht nur hochgespritztes Kühl- beziehungsweise Spülmittel an den Spalten austreten kann, sondern es auch möglich ist, daß Kühlflüssigkeitsdampf durch kleine Spalten zwischen Kanal und Maschinengestell ausweichen kann, der dann in dem kälteren Bereich des Maschinengestells kondensiert und heruntertropft. Dies wirkt ebenfalls wie eine Undichtigkeit. Aus dem Stand der Technik sind auch Lösungen bekannt, bei denen keine Dichtung zwischen Maschinengestell beziehungsweise Anlagenteil und dem Kanalelement vorgesehen ist. Die Abdichtung erfolgt dabei lediglich durch die Überdeckung der Verbindungsteile zwischen Kanalelement und Maschinenteil.

Alle aus dem Stand der Technik bekannten Lösungen weisen den Nachteil auf, daß keine absolute Dichtigkeit gegen Austreten von Kühl- beziehungsweise Spülmittel gewährleistet ist. Zudem ist die Montage der Kanalelemente für die Kühl- beziehungsweise Spülmittelkanäle sehr erschwerlich und insbesondere ist bei einzubauenden Dichtungen nachträglich nicht kontrollierbar, ob die Dichtung, wie erforderlich, tatsächlich hergestellt wurde.

Ausgehend von dem zuvor dargestellten Stand der Technik ist es Aufgabe der Erfindung, eine Maschine oder Anlage mit einem Kanal zur Verfügung zu stellen, die einen sicheren Schutz gegen Austreten des Kühl- beziehungsweise Spülmittels aus den Verbindungsstellen zwischen Maschinengestell und Kühl- beziehungsweise Spülmittekanal bietet und die gleichzeitig die Montage der Kanalteile oder -elemente erleichtert.

Erfindungsgemäß wird diese Aufgabe durch die in den Anspruch 1 für die Maschine oder Anlage und in den Ansprüchen 33 und 37 für ein Montageverfahren vorgeschlagen.

Mit der Erfindung wird eine zuvor dargestellte Maschine oder Anlage vorgeschlagen, die mindestens einen Kanal beziehungsweise ein Kanalprofil zur Ableitung flüssiger Medien, insbesondere Kühl- beziehungsweise Spülmittel besitzt, wobei der Kanal beziehungsweise das Kanalprofil in einen Maschinenständer eingebaut wird und wobei zwischen dem Maschinenständer und dem Kanalprofil eine Dichtung angeordnet ist, die sich dadurch auszeichnet, daß der Maschinenständer mindestens einen, in das Kanalprofil hineinreichenden Schenkel aufweist, der eine mit der Dichtung zusammenwirkende oder die Dichtung tragende Dichtungsfläche aufweist und der Schenkel derart ausgebildet ist, daß er als Spritzschutz für die Dichtung wirkt. Durch die besondere Ausbildung des Schenkels, der in das Kanalprofil hineinreicht und der aber gleichzeitig die Dichtungsfläche oder die Dichtung selbst trägt und als Spritzschutz für die Dichtung wirkt, ist somit eine ausreichend dichte Verbindung zwischen Maschinengestell und Kanalprofil möglich. Durch die Art der Ausbildung der Dichtungsfläche am Maschinenständer ist damit auch ein zusätzlicher Spritzschutz für die Dichtung möglich. Das Kühl-beziehungsweise Spülmittel spritzt nicht mehr direkt auf die Dichtung beziehungsweise Dichtfläche, sondern, wenn überhaupt, dann lediglich indirekt, das heißt, abgeschwächt.

Im Patentanspruch 2 wird eine Maschine oder Anlage mit mindestens einem Kanal beziehungsweise Kanalprofil zur Ableitung flüssiger Medien, insbesondere Kühl- beziehungsweise Spülmittel, das in einen Maschinenständer eingebaut wird, und wobei zwischen dem Maschinenständer und dem Kanalprofil eine Dichtung angeordnet ist, vorgeschlagen, die sich dadurch auszeichnet, daß die Dichtung an beziehungsweise auf dem längs verlaufenden Ende des Kanalprofils angeordnet ist. Die Dichtung kann damit mit der Dichtungsfläche des Maschinenständers zusammenwirken, wobei es keine Bedeutung für diese Lösung besitzt, wo die Dichtungsfläche in dem Schenkel des Maschinenständers ausgebildet ist. Diese Art der Anordnung der Dichtung ermöglicht eine Abdichtung sowohl mit einer waagrecht, senkrecht, als auch schräg angeordneten Dichtungsfläche. Es ist weiterhin möglich, das Kanalelement nach oben, unten oder seitlich, bezogen auf die Einbaustellung, abzudichten. Erfindungsgemäß ist es jedoch auch möglich, die Dichtungsfläche oder eine dichtungstragende Dichtungsfläche an beziehungsweise auf dem längsverlaufenden Ende des Kanalprofils anzuordnen.

Das Zusammenwirken zwischen der im Anspruch 1 mit der im Anspruch 2 vorgeschlagenen Lösung, stellt eine besonders vorteilhafte Art der Abdichtung zwischen Maschinenständer und Kanalprofil dar. Beide Lösungen sind jedoch auch unabhängig voneinander realisierbar.

Gemäß einer Weiterbildung der erfindungsgemäßen Lösung ist es vorgesehen, daß die Dichtungsflächen des Maschinenständers in einer nach außen weisenden U-förmig beziehungsweise nasenartig ausgebildeten Öffnung des Schenkels angeordnet sind.

Gemäß eines weiteren Aspekts der erfindungsgemäßen Lösung ist es möglich, daß das Kanalprofil mit nach unten offenen, U-förmig oder nasenartig ausgebildetem oberen Rand beispielsweise gebörtelten Blechrand ausgebildet ist, an dessen offener Seite eine Dichtung angeordnet ist. Auch hier ist gemäß dem Prinzip der kinematischen Umkehr eine Ausbildung der Dichtungsfläche beziehungsweise einer dichtungstragenden Dichtfläche an dem oberen Rand des Kanalprofils vorgesehen.

Die zuvor dargestellten Lösungen stellen Realisierungsmöglichkeiten der in den Ansprüchen 1 und 2 genannten, erfindungsgemäßen Lösungen dar. Es ist jedoch mit Blick auf die in den Ansprüchen 1 und 2 geschützten Lösungen, eine Vielzahl unterschiedlichster Lösungen beziehungsweise Lösungsvarianten dazu vorstellbar. Mit den in den Ansprüchen 3 und 4 geschützten Lösungen sind vorteilhafte Ausbildungen genannt, die eine sehr sichere und dichte Herstellung der Dichtung zwischen Maschinengestell und Kanalprofil gewährleisten.

Eine Weiterbildung der erfindungsgemäßen Lösung sieht vor, daß das Kanalprofil mit in Einbaurichtung nach oben offenen, U-förmig ausgebildeten oberen Rand versehen ist. Diese Lösung zur Ausbildung des Kanalprofils wird zum Beispiel dann gewählt werden, wenn die Abdichtung des Kanalprofils in Einbaurichtung nach oben hin erfolgen soll, die Dichtung ist dann bereits zuverlässig geführt und gelagert.

Eine Weiterbildung der erfindungsgemäßen Lösung ist dadurch gekennzeichnet, daß die Dichtung derart ausgebildet ist, daß sie mit einer Seite auf den oberen Rand des Kanalprofils aufsteckbar ist, so daß es die offene Seite des Kanalprofils insbesondere formschlüssig und/oder kraftschlüssig umschließt und gleichzeitig abdichtet. Mit dieser Art der Ausbildung der Dichtung ist gewährleistet, daß zum einen die Montage der Dichtung derart erleichtert ist, daß sie lediglich auf den oberen Rand des Kanalprofils aufgesteckt wird. Gleichzeitig ist aber damit gesichert, daß sowohl die Dichtigkeit des Kanalprofils zur Dichtung hergestellt ist, als auch daß gleichzeitig gewährleistet ist, daß die Dichtung während der Montage des Kanalprofils nicht verrutschen kann.

Ein weiterer Aspekt der erfindungsgemäßen Lösung sieht vor, daß die andere, zur Dichtungsfläche des Maschinenständers weisende Seite der Dichtung die Dichtung zwischen Maschinenständer und Kanalprofil bildet.

Die Erfindung schlägt auch vor, daß die Dichtungsfläche des Maschinenständers derart ausgebildet ist, daß die Dichtung mit einer Seite auf die Dichtungsfläche des Maschinenständers aufsteckbar beziehungsweise in die Fläche (zum Beispiel in eine Nut) einsteckbar ist und die dann zum Kanalprofil weisende Seite der Dichtung mit einer am oberen Rand des Kanalprofils angeordneten Dichtungsfläche zusammenwirkt und so den zwischen Kanalprofil und Maschinenständer bestehenden Spalt verschließt beziehungsweise abdichtet. Die Erfindungs umfaßt in jedem Aspekt (auch bei dem Montageverfahren) die kinematische Umkehr der vorgeschlagenen Konzepte und Mittel.

Es wurde auch gefunden, daß es von Vorteil ist, wenn die Dichtung an der zur Dichtungsfläche des Maschinenständers weisenden Seite als Rundprofil oder als Rechteckprofil ausgebildet ist.

In einer Weiterbildung der erfindungsgemäßen Lösung ist es vorgesehen, daß die Dichtung an der zur Dichtungsfläche des Maschinenständers weisenden Seite zusätzlich mindestens eine zur Dichtungsfläche gerichtete Dichtungsnase beziehungsweise mindestens eine Dichtungslippe aufweist. Hierdurch wird eine weitere Erhöhung der Sicherheit der Dichtung insgesamt gewährleistet.

Entsprechend einer Weiterbildung der erfindungsgemäßen Lösung ist es möglich, daß die Dichtung an der zur Dichtungsfläche des Maschinenständers weisenden Seite als Lippendichtung ausgebildet ist.

Für die Ausbildung der Oberflächen der Dichtungsflächen des Maschinenständers ist es unerheblich, ob diese roh, gegossen oder bearbeitet sind. durch die Art der erfindungsgemäßen Ausbildung der Abdichtung ist sichergestellt, daß kein Kühl- beziehungsweise Spülmittel an der Verbindungsstelle zwischen Maschinenständer und Kanalelement austreten kann. Die Kanalprofile können aus Metall, Metallblech, Kunststoff oder aus Verbundwerkstoffen gebildet sein.

In einer vorteilhaften Weiterbildung der erfindungsgemäßen Lösung wurde gefunden, daß es von Vorteil ist, wenn das Kanalprofil mindestens eine Montagehilfsvorrichtung aufweist, mittels derer das Kanalprofil anhebbar beziehungsweise absenkbar ist.

Besonders vorteilhaft ist es dabei, wenn die Montagehilfsvorrichtung unterhalb des Kanalprofils angeordnet ist. Eine Weiterbildung der zuvor genannten Lösungen sieht vor, daß die Montagehilfsvorrichtung durch mindestens einen Exzenter gebildet ist. Damit kann entsprechend der Ausbildung der Profile beziehungsweise der Dichtungsflächen des Maschinenständers mit Hilfe der Montagehilfsvorrichtung entweder das Kanalprofil angehoben beziehungsweise Abgesenkt werden. Während des Einschiebens des Kanalprofils in den Maschinenständer kann mittels dieser Montagehilfsvorrichtung das Kanalprofil in der einmal eingestellten Lage gehalten werden, so daß es zu keiner ungewollten Berührung des Kanalelements mit dem Maschinenständer so lange kommt, bis das Kanalelement unter dem Maschinenstände seine Montageposition erreicht wird und dann entweder abgesenkt beziehungsweise angehoben wird.

Es ist von Vorteil, wenn die Montagehilfsvorrichtung anbeziehungsweise abmontierbar ausgebildet ist. Damit wird diese Montagehilfsvorrichtung nur in kleineren Stückzahlen für die jeweilige Montage bereitsgestellt werden müssen, wodurch ein bestimmter materialökonomischer Effekt erreicht ist.

Die Montagehilfsvorrichtung kann jedoch auch durch unterhalb des Kanalprofils anordenbare Schienen und/oder Rollen gebildet werden.

In einer Weiterbildung der Erfindung ist es vorgesehen, daß zwischen Anschlußseite des Maschinenständers und Verlängerungen des Maschinenständers, die an die Anschlußseite angebaut werden sollen, mindestens ein Verbindungsteil angeordnet ist, das einen Schenkel aufweist, der in das Kanalprofil hineinreicht, der eine mit der Dichtung zusammenwirkende oder die Dichtung tragende Dichtungsfläche besitzt, wobei der Schenkel derart ausgebildet ist, daß er als Spritzschutz für die Dichtung wirkt. Das Verbindungsteil wird dabei als Bestandteil des Kanalprofils verstanden. Hiermit wird erreicht, daß an der Verbindungsstelle zwischen dem Maschinenständer und einer Verlängerung des Maschinenständers beziehungsweise der Anlage ebenfalls die gleiche Abdichtungsmöglichkeit hergestellt ist, wie sie zwischen dem Kanalelement und dem Maschinenständer bereits vorgeschlagen wurde.

Eine Weiterbildung dieser Lösung sieht vor, daß der in das Kanalprofil weisende Schenkel als U-förmig beziehungsweise nasenartig abgewinkeltes Formteil ausgebildet ist.

Es wurde weiter gefunden, daß es von Vorteil ist, wenn das obere Endes des Verbindungsteils der Form des Maschinengestells angepaßt ist und daß das Verbindungsteil an dem Maschinengestell befestigbar ausgeführt ist.

Ein Aspekt der erfindungsgemäßen Lösung sieht vor, daß zwischen der Schräge der oberen Nase des Kanals beziehungsweise Kanalprofils und dem zuvor dargestellten Verbindungsteil eine im Querschnitt trapezförmig ausgebildete Dichtungsplatte angeordnet ist. Durch diese Dichtungsplatte wird eine zusätzliche Sicherheit hinsichtlich austretenden Kühl- beziehungsweise Spülmittels hergestellt.

Erfindungsgemäß wird auch eine Lösung zur Verfügung gestellt, die für eine Maschine oder Anlage mit mindestens einem Kanal beziehungsweise Kanalprofil vorgesehen ist, wobei das Kanalprofil im Einbauzustand unter dem Maschinenständer im Boden beziehungsweise in der Aufstellfläche des Maschinenständers angeordnet ist. Diese Lösung zeichnet sich dadurch aus, daß zwischen Kanal beziehungsweise Kanalprofil und dem Maschinenständer mindestens ein der Form des Querschnitts des Maschinenständers an der Anschlußfläche beziehungsweise der Form des Anschlußes am Kanalprofil entsprechender Abdeckstreifen als Teil des Kanalprofils angeordnet ist.

Eine Weiterbildung dieser Lösung sieht vor, daß der Abdeckstreifen sowohl an der zur Anschlußfläche des Maschinenständers weisenden Seite, als auch an der zum Kanalprofil weisenden Seite Dichtungsprofile trägt. Das Dichtungsprofil an der zum Abdeckstreifen weisenden Seite ist dabei derart ausgebildet, daß es auf diesen aufsteckbar ist, so daß es den oberen Rand form- und/oder kraftschlüssig umschließt und gleichzeitig abdichtet.

Das Dichtungsprofil an der zum Kanal- beziehungsweisen dem Kanalprofil weisenden Seite am Abdeckstreifen ist dabei vom Kanalprofil aus gesehen vorteilhafterweise nach außen abgewinkelt.

Zur Befestigung des abgewinkelten Dichtungsprofils an dem Abdeckstreifen wird vorgeschlagen, daß das Dichtungsprofil mit einer Seite des Winkels in einer Ausnehmung des Abdeckstreifens kraft- und/oder formschlüssig angeordnet ist.

Eine Weiterbildung der zuvor geschilderten erfindungsgemäßen Lösung sieht vor, daß der Abdeckstreifen an der zum Kanal beziehungsweise dem Kanalprofil weisenden Seite nach der Kanalinnenseite abgewinkelt ist und zwar derart, daß er vom Ende der Ausnehmung schräg und dann wieder lotrecht in das Kanalinnere verläuft. Durch diese gefundene Möglichkeit zur Ausbildung des Abdeckstreifens wird gleichzeitig ein Spritzschutz für die Dichtung des Abdeckstreifens am Kanal beziehungsweise Kanalprofil zur Verfügung gestellt.

Maschinen oder Anlagen der zuvor geschilderten Art sind häufig derart aufgestellt, daß sie ein Gefälle zur Aufstellfläche aufweisen. Es kann aber auch möglich sein, daß das Kanalprofil mit Gefälle eingebaut wird. Damit ändern sich die Abmessungen der Öffnung zwischen Kanalprofil und Maschinenständer und damit auch die notwendigen Abmessungen des Abdeckstreifens. Eine Weiterbildung der erfindungsgemäßen Lösung sieht daher vor, daß der Abdeckstreifen in seinen Abmessungen dem Gefälle des Maschinengestells beziehungsweise des Kanals oder Kanalprofils angepaßt ist.

Es wurde gefunden, daß es von Vorteil ist, wenn die Dichtung und die Dichtungsprofile als Moosgummi, Silikon, Kautschuk, Gummi oder aus einem wärme- und chemikalienbeständigen, vulkanisierbaren Fluorelastomer auf der Basis von Vinylidenfluorid-Hexafluorpropylen-Copolymerisaten (wie Viton), insbesondere aus einem Material gebildet sind, das gegenüber dem oder den abzudichtenden Medien beständig ist. Viton ist ein als Marke geschütztes Zeichen für die zuvor beschriebenen Dichtmaterialien und insbesondere gegen sehr agressive Medien beständig.

Gemäß der Erfindung wird auch ein Verfahren zur Montage von Maschinen oder Anlagen, unter deren Maschinenständern mindestens ein Kanalprofil eingebaut wird, vorgeschlagen. Das Kanalprofil, welches an seinem offenen Ende die Dichtungen trägt, wird dabei derart in den Maschinenständer eingeschoben, daß die an dem Kanalprofil angeordneten, mit diesen zusammenwirkenden Dichtungen von der mit der Dichtung zusammenwirkenden Dichtungsfläche des Maschinenständers so beabstandet ist, daß ein Spalt zwischen Dichtung und Dichtungsfläche verbleibt. Nachdem das Kanalprofil seine Montageposition erreicht hat, wird eine Relativbewegung von Kanalprofil zum Maschinenständer zu bewirkt, um dem Spalt zu schließen.

Die Relativbewegung ist je nach der Ausgestaltung und Anordnung der Dichtflächen und Dichtungen am Maschinenständer beziehungsweise am Kanalprofil entweder in horizontaler oder in vertikaler Bewegungsrichtung möglich. Die Bewegungsrichtung ist somit von der Ausführung beziehungsweise Anordnung der Dichtungen und Dichtflächen definiert.

Gemäß einer Weiterbildung des zuvor beschriebenen Verfahrens ist es vorgesehen, daß das Kanalprofil in Öffnungen des Maschinenständers auf einen im Bezug auf die Dichtungsfläche, je nach Ausbildung des oberen Randes des Kanalprofiles, höherem oder niedrigerem Niveau derart eingeschoben wird, daß die Dichtungsprofile noch nicht mit dem Dichtungsflächen des Maschinenständers in Berührung kommen. Das Kanalprofil wird nach Erreichen der Endposition gegenüber dem Maschinenständer abgesenkt beziehungsweise angehoben und zwar derart, daß die Dichtungsprofile mit den Dichtungsflächen des Maschinenständers beziehungsweise des Kanalprofils in Kontakt geraten und die Dichtung herstellen.

In einer Weiterbildung des erfindungsgemäßen Verfahrens wird vorgeschlagen, daß in einem ersten Verfahrensschritt das Kanalprofil in die Öffnungen des Maschinenständers mit einem Abstand in Bezug auf die Dichtungsfläche, je nach Ausbildung dieser Dichtungsfläche, eingeschoben wird und zwar derart, daß die Dichtungsprofile noch nicht mit den Dichtungsflächen des Maschinenständers beziehungsweise des Kanalprofils in Berührung kommen. In einem nächsten Verfahrensschritt wird das Kanalprofil insbesondere mit seiner offenen Seite nach Erreichen der Endposition gegenüber dem Maschinenständer vertikal derart bewegt, daß die Dichtungsprofile mit den Dichtungsflächen des Maschinenständers beziehungsweise des Kanalprofils in Kontakt geraten und die Dichtung herstellen. Die Bewegung des Kanalprofils mit seiner offenen Seite kann auch schräg erfolgen, wenn die Anordnung der Dichtungsflächen dies erfordert.

Eine Weiterbildung des erfindungsgemäßen Verfahrens ist gekennzeichnet durch die Verwendung einer Montagehilfsvorrichtung, mittels derer das Kanalprofil angehoben beziehungsweise abgesenkt wird und während des Einschiebens des Kanalprofils dieses in der angehobenen beziehungsweise abgesenkten Lage so lange gehalten wird, bis es die Endposition erreicht hat. Die Montagehilfsvorrichtung dient weiterhin dazu das Einschieben des Kanalprofils dadurch zu erleichtern, daß beispielsweise Schienen und Rollen unterhalb des Kanalprofils angeordnet sind, so daß dieses sehr leicht unter den Maschinenständer geschoben werden kann.

Die erfindungsgemäße gestellte Aufgabe wird auch gelöst durch ein Verfahren zur Montage von Maschinen oder Anlagen unter deren Maschinenständer mindestens ein Kanalprofil eingebaut wird, welches durch die Abfolge folgender Verfahrensschritte gekennzeichnet ist:
- der Zwischenraum zwischen Kanalprofil und Maschinengestell wird mittels mindestens eines Abdeckstreifens abgedeckt;
- der/die Abdeckstreifen werden mittels der daran angeordneten und mit dazu korrespondierenden, am Maschinengestell angebrachten Befestigungsmitteln befestigt.

Die Erfindung wird nachfolgend anhand von Ausführungsbeispielen und Zeichnungen näher erläutert. Es zeigen:
- Fig. 1a, b: eine Schnittdarstellung durch die Unterseite eines Maschinenständers mit daran angeordnetem Kanalprofil im eingebauten Zustand (Fig. 1a) und in Montagestellung (Fig. 1b) und
- Fig. 2: eine Schnittdarstellung durch die Unterseite eines Maschinenständers mit daran angeordnetem Kanalprofil unterhalb der Aufstellfläche.

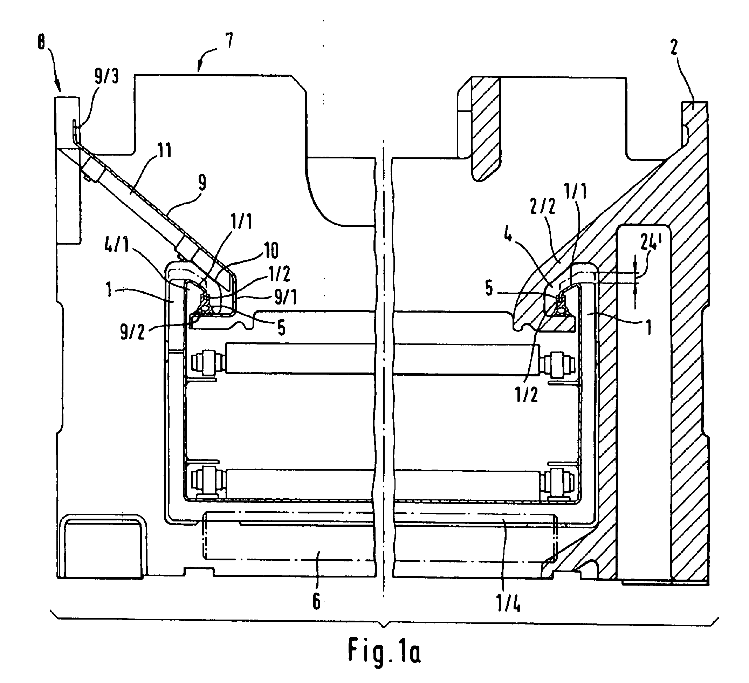

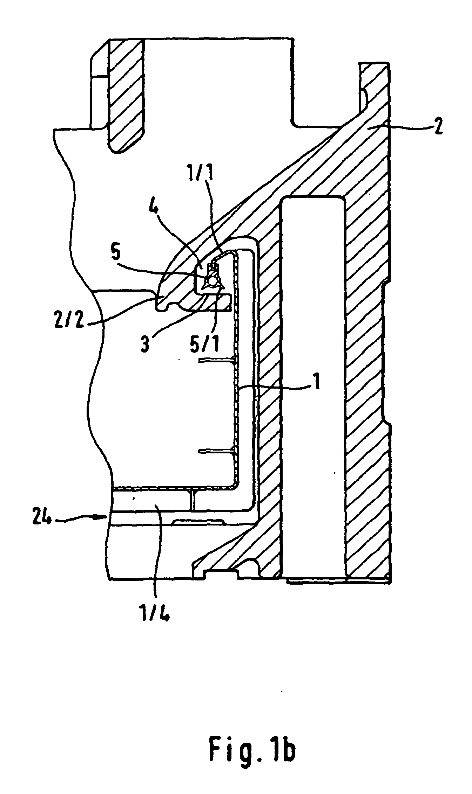

Fig. 1a, b zeigt einen Schnitt durch die Unterseite eines Maschinenständers 2 mit daran angeordnetem Kanalprofil 1 oberhalb der Aufstellfläche der Anlage oder Maschine. Der Maschinenständer 2 weist dabei einen in das Kanalprofil 1 hineinreichenden Schenkel 2/2 auf, wobei in der Darstellung gemäß Fig. 1a die Dichtungsfläche 3 des Maschinenständers 2 in einer nach außen weisenden U-förmig beziehungsweise nasenartig ausgebildeten Öffnung 4 des Schenkels 2/2 angeordnet ist. Das Kanalprofil 1 ist in der Darstellung gemäß Fig. 1a mit einem nach unten offenen, U-förmig oder nasenartig ausgebildetem oberen Rand 1/1 ausgebildet, dessen offene Seite 1/2 eine Dichtung 5 trägt. In der Darstellung gemäß der Fig. 1a befindet sich das Kanalprofil 1 bereits in einem abgesenkten Zustand. In dem in Fig. 1b dargestellten Ausschnitt befindet sich das Kanalprofil in einem angehobenen Zustand.

In dieser Darstellung (Fig. 1b) besser zu sehen ist, daß das Dichtungsprofil 5 zusätzlich eine zur Dichtungsfläche 3 gerichtete Dichtungsnase 5/1 trägt, die auch als Dichtungslippe ausgebildet sein kann. Unterhalb 1/4 des Kanalprofils 1 ist eine Montagehilfsvorrichtung 6 angeordnet.

Die Montagehilfsvorrichtung kann durch Rollen und Schienen auf der Unterseite des Kanalprofils oder durch einen oder mehrere Exzenter gebildet sein. Mittels der Montagehilfsvorrichtung 6 wird beispielsweise das Kanalprofil 1 entweder angehoben beziehungsweise abgesenkt oder aber während der Montage in den Maschinenständer eingefahren.

In der Darstellung gemäß der Fig. 1a ist eine Lösung zur Verbindung zwischen Anschlußseite 7 des Maschinenständers 2 und Verlängerungen 8 des Maschinenständers 2 dargestellt. Hierbei ist ein Verbindungsteil 9 als Teil des Kanalprofils 1 vorgesehen, das einen Schenkel 9/1 besitzt, der in das Kanalprofil 1 hineinreicht und der eine mit der Dichtung zusammenwirkenden oder die Dichtung 5 tragende Dichtungsfläche 9/2 aufweist, wobei der Schenkel 9/1 so ausgebildet ist, daß er gleichzeitig als Spritzschutz für die Dichtung 5 wirkt.

Im Fall der Darstellung gemäß der Fig. 1a, b ist der in das Kanalprofil 1 weisende Schenkel 9/1 als U-förmig beziehungsweise nasenartig oder hakenartig abgewinkeltes Formteil ausgebildet. Er entspricht in etwa der Ausbildung des Schenkels 2/2. Das obere Ende 9/3 des Verbindungsteils 9 ist der Form des Maschinengestells 2 an der Befestigungsstelle angepaßt.

Zwischen der Schräge 10 der oberen Nase des Kanals beziehungsweise des Kanalprofils 1 und dem Verbindungsteil 9 ist eine im Querschnitt trapezförmig ausgebildete Dichtungsplatte 11 angeordnet.

Das in der Fig. 1a, b dargestellte Lösungsprinzip ist insbesondere dafür geeignet, das Kanalprofil 1 mittels den bereits vormontierten Dichtungen 5 unter zurhilfenahme der Montagehilfsvorrichtung 6 auf ein Niveau 24, 24' anzuheben, so daß es nicht mehr mit der Dichtungsfläche 3 beziehungsweise 9/2 in Verbindung steht beziehungsweise von diesen beabstandet ist, diese Stellung ist auf der rechten Ausschnittseite der Fig. 1 dargestellt. In dieser Stellung wird das Kanalprofil 1 in den Maschinenständer eingeschoben beziehungsweise eingefahren. Nach Erreichen seiner Endposition wird das Kanalprofil 1 unter zuhilfenahme der Montagehilfsvorrichtung 6 dann abgesenkt. Diese Lösung ist besonders vorteilhaft, da durch das eigene Gewicht des Kanalprofils 1 bereits eine ausreichend sichere Dichtung erreicht wird. Die Dichtung ist zudem durch die nasenförmige Ausbildung des Schenkels und die daran universell vorgesehene Anordnung der Dichtungsflächen sehr gut geschützt.

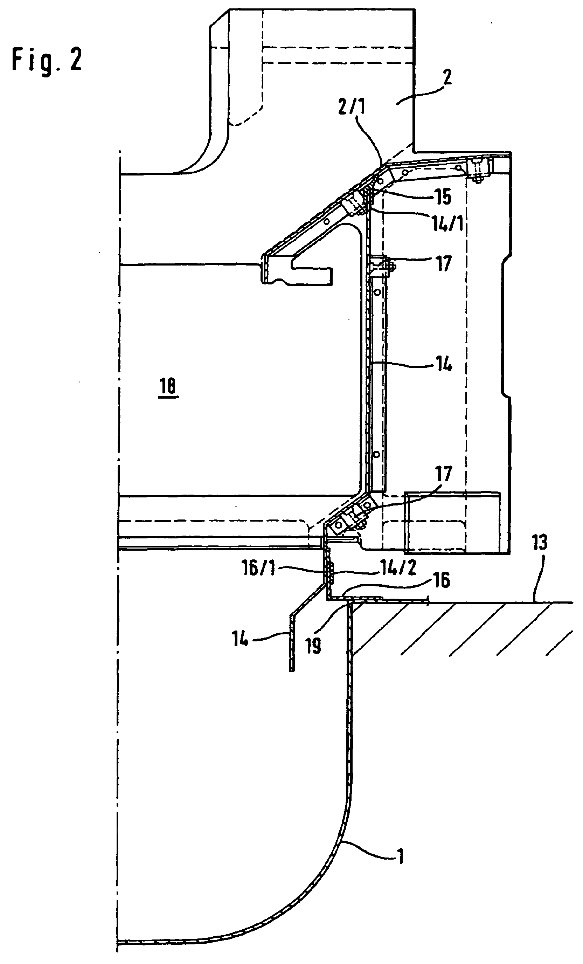

Fig. 2 zeigt die Schnittdarstellung durch die Unterseite eines Maschinenständers 2 mit daran angeordnetem Kanalprofil 1 unterhalb der Aufstellfläche 13 der Maschine oder Anlage. In dieser Ausführungsvariante entsteht ein Zwischenraum 18 zwischen Maschinenständer 2 und Kanalprofil 1, da das Kanalprofil in den Fußboden beziehungsweise die Aufstellfläche 13 eingelassen, beispielsweise einbetoniert wurde. Zur Schließung dieses Zwischenraumes wird ein Abdeckstreifen 14 zwischen der Anschlußfläche 2/1 am Maschinenständer 2 und der Anschlußfläche 19 am Kanalprofil 1 angeordnet. Dieser Abdeckstreifen 14 trägt sowohl an der zur Anschlußfläche 2/1 des Maschinenständers 2 weisenden Seite als auch an der zum Kanalprofil 1 weisenden Seite Dichtungsprofile 15 beziehungsweise 16. Das Dichtungsprofil 15 ist dabei an der zum Maschinenständer 2 weisenden Seite als Lippendichtung ausgebildet. Auf der anderen Seite ist die Lippendichtung so ausgeführt, daß sie auf den Abdeckstreifen 14 am oberen Rand 14/1 aufsteckbar ist. Eine derartige Ausführung der Dichtung 15 gewährleistet eine sichere Abdichtung sowohl zum Maschinenständer 2 hin, als auch zum Abdeckstreifen 14. Die geteilte Ausführung der Lippendichtung, die zum Aufstecken auf den oberen Rand 14/1 des Abdeckstreifens 14 gedacht ist, stellt sicher, daß das Dichtungsprofil form- und/oder kraftschlüssig auf dem Abdeckstreifen 14 befestigbar ist.

Mit dem Bezugszeichen 17 sind die Befestigungsmittel bezeichnet, mittels derer die Abdeckplatte 14 an dem Maschinenständer beziehungsweise am Kanalprofil befestigt wird. Das Dichtungsprofil 16, welches an der zum Kanal beziehungsweise Kanalprofil 1 weisenden Seite des Abdeckstreifens 14 angebracht wird, ist als Winkelprofil ausgebildet. Eine Seite des Dichtungs-/Winkelprofils 16/1 wird in eine Ausnehmung 14/2 eingeführt, die die Dichtung 16 gleichzeitig hält und gegenüber dem Kanalinneren abdichtet.

In der Darstellung gemäß Fig. 2 ist ebenfalls zu erkennen, daß der Abdeckstreifen 14 und der zum Kanal beziehungsweise Kanalprofil 1 weisenden Seite nach der Kanalinnenseite abgewinkelt ist. Etwa vom Ende der Ausnehmung 14/2 ist der Abdeckstreifen 14 schräg abgewinkelt und nimmt dann wieder eine lotrechte Stellung in das Kanalinnere ein. Diese Art der Ausbildung gewährleistet einen zuverlässigen Spritzschutz für die Dichtung 16.

## Patentansprüche

1. Maschine oder Anlage mit mindestens einem Kanal bzw. Kanalprofil (1) zur Ableitung flüssiger Medien, insbesondere Kühl- oder Spülflüssigkeiten, das in einen MaschinenStänder (2) eingebaut wird, und wobei zwischen dem Maschinenständer und dem Kanalprofil eine Dichtung (5) angeordnet ist, die mit Dichtflächen am Maschinenständer und am Kanalprofil zusammenwirkt, **dadurch gekennzeichnet, daß** der Maschinenständer (2) mindestens einen in das Kanalprofil (1) hineinreichenden Schenkel (2/2) aufweist, der eine mit der Dichtung zusammenwirkende oder die Dichtung (5) tragende Dichtungsfläche (3) aufweist und der Schenkel (2/2) als Spritzschutz für die Dichtung (5) ausgebildet ist.

2. Maschine oder Anlage nach Anspruch 1, **dadurch gekennzeichnet, daß** die Dichtung (5) oder eine dichtungstragende Dichtfläche oder eine Dichtungsfläche an bzw. auf dem längsverlaufenden Ende des Kanalprofils (1) angeordnet ist.

3. Maschine oder Anlage nach einem der vorstehenden Ansprüche, **dadurch gekennzeichnet, daß** der Schenkel (2/2) derart als Spritzschutz für die Dichtung (5) ausgebildet ist, daß die Dichtungsflächen (3) des Maschinenständers (2) in einer nach außen weisenden U-förmig bzw. nasenartig ausgebildeten Öffnung (4) des Schenkels (2/2) angeordnet sind.

4. Maschine oder Anlage nach einem der vorstehenden Ansprüche 1 bis 3, **dadurch gekennzeichnet, daß** das Kanalprofil (1) mit nach unten offenen, U-förmig oder nasenartig ausgebildetem oberen Rand (1/1), beispielsweise gebördeltem Blechrand, ausgebildet ist, an dessen offener Seite (1/2) eine Dichtung (5), Dichtungsfläche oder dichtungstragende Dichtfläche angeordnet ist.

5. Maschine oder Anlage nach einem der vorstehenden Ansprüche 1 bis 3, **dadurch gekennzeichnet, daß** das Kanalprofil (1) mit in Einbaurichtung nach oben offenen, U-förmig ausgebildetem oberen Rand versehen ist.

6. Maschine oder Anlage nach einem der vorstehenden Ansprüche 1 bis 5, **dadurch gekennzeichnet, daß** die Dichtung (5) derart ausgebildet ist, daß sie mit einer Seite auf den oberen Rand (1/1) des Kanalprofils (1) aufsteckbar ist, so daß es die offene Seite (1/2) des Kanalprofils (1) umschließt und gleichzeitig abdichtet.

7. Maschine oder Anlage nach einem der vorstehenden Ansprüche 1 bis 6, **dadurch gekennzeichnet, daß** die andere zur Dichtungsfläche (3) des Maschinenständers (2) weisende Seite der Dichtung (5) mit der Dichtungsfläche (3) die Dichtung zwischen Maschinenständer (2) und Kanalprofil (1) bildet.

8. Maschine oder Anlage nach einem der vorstehenden Ansprüche 1 bis 7, **dadurch gekennzeichnet, daß** die Dichtungsfläche (3) derart ausgebildet ist, daß die Dichtung (5) mit der zum Maschinenständer (2) weisenden Seite auf die Dichtungsfläche (3) aufsteckbar bzw. einsteckbar ist und die zum Kanalprofil (1) weisende Seite der Dichtung (5) mit einer am oberen Rand (1/1) angeordneten Dichtungsfläche die Dichtung bildet.

9. Maschine oder Anlage nach einem der vorstehenden Ansprüche 1 bis 8, **dadurch gekennzeichnet, daß** die Dichtung (5) an der zur Dichtungsfläche (3) des Maschinenständers (2) weisenden Seite als Rundprofil oder als Rechteckprofil ausgebildet ist.

10. Maschine oder Anlage nach einem der vorstehenden Ansprüche 1 bis 9, **dadurch gekennzeichnet, daß** die Dichtung (5) an der zur Dichtungsfläche (3) des Maschinenständers (2) weisenden Seite zusätzlich mindestens eine zur Dichtungsfläche (3) gerichtete Dichtungsnase (5/1) bzw. Dichtungslippe aufweist.

11. Maschine oder Anlage nach einem der vorstehenden Ansprüche 1 bis 10, **dadurch gekennzeichnet, daß** die Dichtung (5) an der zur Dichtungsfläche (3) des Maschinenständers (2) weisenden Seite als Lippendichtung ausgebildet ist.

12. Maschine oder Anlage nach einem der vorstehenden Ansprüche 1 bis 11, **dadurch gekennzeichnet, daß** die Dichtung (5) an der zur Dichtungsfläche (3) des Maschinenständers (2) weisenden Seite als schlauchförmiges Hohlprofil ausgebildet ist.

13. Maschine oder Anlage nach einem der vorstehenden Ansprüche 1 bis 12, **dadurch gekennzeichnet, daß** die Dichtungsflächen (3) des Maschinenständers (2) roh, gegossen oder bearbeitet sind.

14. Maschine oder Anlage nach einem der vorstehenden Ansprüche 1 bis 13, **dadurch gekennzeichnet, daß** die Kanalprofile (1) aus Metall, Metallblech, Kunststoff oder Verbundwerkstoffen gebildet sind.

15. Maschine oder Anlage nach einem der vorstehenden Ansprüche 1 bis 14, **dadurch gekennzeichnet, daß** das Kanalprofil (1) mindestens eine Montagehilfsvorrichtung (6) aufweist, mittels derer das Kanalprofil (1) anhebbar bzw. absenkbar ist.

16. Maschine oder Anlage nach einem der vorstehenden Ansprüche 1 bis 15, **dadurch gekennzeichnet, daß** die Montagehilfsvorrichtung (6) unterhalb (1/4) des Kanalprofils (1) angeordnet ist.

17. Maschine oder Anlage nach einem der vorstehenden Ansprüche 1 bis 16, **dadurch gekennzeichnet, daß** die Montagehilfsvorrichtung (6) durch mindestens einen Exzenter gebildet ist.

18. Maschine oder Anlage nach einem der vorstehenden Ansprüche 1 bis 17, **dadurch gekennzeichnet, daß** die Montagehilfsvorrichtung (6) an- bzw. abmontierbar ausgebildet ist.

19. Maschine oder Anlage nach einem der vorstehenden Ansprüche 1 bis 18, **dadurch gekennzeichnet, daß** die Montagehilfsvorrichtung (6) durch unterhalb (1/4) des Kanalprofils (1) angeordneten Schienen und/oder Rollen gebildet ist.

20. Maschine oder Anlage nach einem der vorstehenden Ansprüche 1 bis 19, **dadurch gekennzeichnet, daß** zwischen Anschlußseite (7) des Maschinenständers (2) und Verlängerungen (8) des Maschinenständers (2) mindestens ein Verbindungsteil (9) insbesondere als Teil des Kanalprofils (1) angeordnet ist, das einen Schenkel (9/1) aufweist, der in das Kanalprofil (1) hineinreicht, der eine mit der Dichtung zusammenwirkende oder die Dichtung (5) tragende Dichtungsfläche (9/2) aufweist, wobei der Schenkel (9/1) derart ausgebildet ist, daß er als Spritzschutz für die Dichtung (5) wirkt.

21. Maschine oder Anlage nach einem der vorstehenden Ansprüche 1 bis 20, **dadurch gekennzeichnet, daß** der in das Kanalprofil weisende Schenkel (9/1) als U-förmig bzw. nasenartig abgewinkeltes Formteil ausgebildet ist.

22. Maschine oder Anlage nach einem der vorstehenden Ansprüche 1 bis 21, **dadurch gekennzeichnet, daß** das obere Ende (9/3) des Verbindungsteils (9) der Form des Maschinengestells (2) angepasst ist und daran befestigbar ist.

23. Maschine oder Anlage nach einem der vorstehenden Ansprüche 1 bis 22, **dadurch gekennzeichnet, daß** zwischen der Schräge (10) der oberen Nase des Kanals bzw. Kanalprofils (1) und dem Verbindungsteil (9) eine im Querschnitt trapezförmig ausgebildete Dichtungsplatte (11) angeordnet ist.

24. Maschine oder Anlage mit mindestens einem Kanal bzw. Kanalprofil (1), das im Einbauzustand unter dem Maschinenständer (2) im Boden bzw. in der Aufstellfläche (13) des Maschinenständers (2) angeordnet ist nach einem der vorhergehenden Ansprüche 1 bis 23, **dadurch gekennzeichnet, daß** zwischen Kanal bzw. Kanalprofil (1) und Maschinenständer (2) mindestens ein der Form des Querschnittes des Maschinenständers (2) an der Anschlußfläche (2/1) bzw. der Form des Anschlusses (1/1) am Kanalprofil (1) entsprechender Abdeckstreifen (14) als Teil des Kanalprofils (1) angeordnet ist.

25. Maschine oder Anlage nach Anspruch 24, **dadurch gekennzeichnet, daß** der Abdeckstreifen (14) sowohl an der zur Anschlussfläche (2/1) des Maschinenständers (2) weisenden Seite als auch an der zum Kanalprofil (1) weisenden Seite Dichtungsprofile (15, 16) trägt.

26. Maschine oder Anlage nach einem der vorstehenden Ansprüche 24 und 25, **dadurch gekennzeichnet, daß** das Dichtungsprofil (15) an der zum Maschinenständer (2) weisenden Seite als Lippendichtung ausgebildet ist.

27. Maschine oder Anlage nach einem der vorstehenden Ansprüche 24 und 25, **dadurch gekennzeichnet, daß** das Dichtungsprofil (15) an der zum Abdeckstreifen (14) weisenden Seite derart ausgebildet ist, daß es auf den Abdeckstreifen (14) aufsteckbar ist, so daß es den oberen Rand (14/1) umschließt und gleichzeitig abdichtet.

28. Maschine oder Anlage nach einem der Ansprüche 24 bis 27, **dadurch gekennzeichnet, daß** das Dichtungsprofil (16) an der zum Kanal bzw. Kanalprofil (1) weisenden Seite vom Kanalprofil (1) aus gesehen nach außen abgewinkelt ist.

29. Maschine oder Anlage nach einem der Ansprüche 24 bis 28, **dadurch gekennzeichnet, daß** das Dichtungsprofil (16) mit einer Seite des Winkels (16/1) in einer Ausnehmung (14/2) des Abdeckstreifens (14) kraft- und/oder formschlüssig angeordnet ist.

30. Maschine oder Anlage nach einem der Ansprüche 24 bis 29, **dadurch gekennzeichnet, daß** der Abdeckstreifen (14) an der zum Kanal bzw. Kanalprofil (1) weisenden Seite nach der Kanalinnenseite abgewinkelt ist, derart, daß er vom Ende der Ausnehmung schräg und dann wieder lotrecht in das Kanalinnere verläuft.

31. Maschine oder Anlage nach einem der Ansprüche 24 bis 30, **dadurch gekennzeichnet, daß** der Abdeckstreifen (14) in seinen Abmessungen dem Gefälle des Maschinengestells (2) bzw. des Kanals oder Kanalprofils (1) angepaßt ist.

32. Maschine oder Anlage nach einem der vorstehenden Ansprüche 1 bis 31, **dadurch gekennzeichnet, daß** die Dichtungsprofile (5, 15, 16) als Moosgummi, Silicon, Kautschuk, Gummi, oder Fluorelastomere (wie Viton), insbesondere aus einem Material gebildet sind, das gegenüber dem oder den abzudichtenden Medien beständig ist.

33. Verfahren zur Montage von Maschinen oder Anlagen nach einem der vorhergehenden Ansprüche 1 bis 24 und 32, unter deren Maschinenständer mindestens ein Kanalprofil eingebaut wird, **dadurch gekennzeichnet, daß** das Kanalprofil, welches an seinem offenen Ende die Dichtung trägt oder dort eine mit der Dichtung zusammenwirkende Dichtfläche aufweist, derart in den Maschinenständer eingeschoben wird, daß die an dem Kanalprofil angeordnete Dichtungsfläche, die mit der Dichtung zusammenwirkt, von der mit der Dichtung zusammenwirkenden Dichtungsfläche des Maschinenständers so beabstandet ist, daß ein Spalt zwischen Dichtung und Dichtungsfläche verbleibt, und hernach, nachdem das Kanalprofil seine Montageposition erreicht hat, eine Relativbewegung zwischen Kanalprofil und Maschinenständer erfolgt, um den Spalt zu schließen.

34. Verfahren nach Anspruch 33 **gekennzeichnet durch** die Abfolge folgender Verfahrensschritte:
- das Kanalprofil wird in Bezug auf die Dichtungsfläche je nach Ausbildung des oberen Rands des Kanalprofils höherem oder niedrigerem Niveau derart eingeschoben, daß die Dichtungsprofile noch nicht mit den Dichtungsflächen des Maschinenständers in Berührung kommen,
- das Kanalprofil wird nach Erreichen der Endposition gegenüber dem Maschinenständer abgesenkt bzw. angehoben, derart, daß die Dichtungsprofile mit den Dichtungsflächen des Maschinenständers in Kontakt geraten und die Dichtung herstellen.

35. Verfahren nach einem der Ansprüche 33 und 34, **gekennzeichnet durch** die Verwendung einer Montagehilfsvorrichtung, mittels derer das Kanalprofil angehoben bzw. abgesenkt wird und während des Einschiebens des Kanalprofils dieses in der angehobenen bzw. abgesenkten Lage solange gehalten wird, bis die Endposition erreicht ist.

36. Verfahren nach einem der Ansprüche 33 bis 35, **dadurch gekennzeichnet, daß**
- in einem ersten Verfahrensschritt das Kanalprofil in die Öffnungen des Maschinenständers mit einem Abstand in Bezug auf die Dichtungsfläche je nach Art der Ausbildung der Dichtungsfläche eingeschoben wird, derart, daß das oder die Dichtungsprofile nicht mit den Dichtungsflächen des Maschinenständers bzw. des Kanalprofils in Verbindung kommen, und
- in einem weiteren Verfahrensschritt das Kanalprofil mit seiner offenen Seite nach Erreichen der Endposition gegenüber dem Maschinenprofil vertikal und/oder schräg derart bewegt wird, daß das oder die Dichtungsprofile mit den Dichtungsflächen des Maschinenständers bzw. des Kanalprofils in Kontakt geraten und die Dichtung herstellen.

37. Verfahren zur Montage von Maschinen oder Anlagen nach einem der Ansprüche 24 bis 31, unter deren Maschinenständer mindestens ein Kanalprofil eingebaut wird, **gekennzeichnet durch** die Abfolge folgender Verfahrensschritte:
- der Zwischenraum zwischen Kanalprofil und Maschinengestell wird mittels mindestens einem Abdeckstreifen abgedeckt,
- der/die Abdeckstreifen wird/werden mittels der daran angeordneten und mit dazu korrespondierenden, am Maschinengestell angebrachten Befestiguntgsmitteln befestigt.

## Claims

1. Machine or installation with at least one channel or channel profile (1) for removing liquid media, in particular cooling or rinsing liquids, which is built in in a machine tool table (2), and wherein between the machine tool table and the channel profile a seal (5) is arranged interacting with sealing surfaces at the machine tool table and the channel profile, **characterised in that** the machine tool table (2) has at least one leg (2/2) extending in the channel profile (1) which has a sealing surface (3) interacting with the seal or carrying the seal (5), and the leg (2/2) is designed as splash protection for the seal (5).

2. Machine or installation according to claim 1, **characterised in that** the seal (5) or a sealing surface carrying the seal or a sealing surface is arranged at or on the longitudinally extending end of the channel profile (1).

3. Machine or installation according to one of the preceding claims, **characterised in that** the leg (2/2) is designed as splash protection for the seal (5) in such a way that the sealing surfaces (3) of the machine tool table (2) are arranged in an opening (4) of the leg (2/2), the opening (4) pointing towards the outside or being designed nose-like.

4. Machine or installation according to one of the preceding claims 1 to 3, **characterised in that** the channel profile (1) is designed with an upper edge (1/1) open to the bottom which is U-shaped or nose-like, for example a flanged sheet metal edge, at the open side (1/2) of which a seal (5), sealing surface or sealing surface carrying a seal is arranged.

5. Machine or installation according to one of the preceding claims 1 to 3, **characterised in that** the channel profile (1) is provided with a U-shaped upper edge which is open to the top in the direction of assembly.

6. Machine or installation according to one of the preceding claims 1 to 5, **characterised in that** the seal (5) is designed in such a way that it is slip-on with one side on the upper edge (1/1) of the channel profile (1) so that it encloses and, at the same time, seals the open side (1/2) of the channel profile (1).

7. Machine or installation according to one of the preceding claims 1 to 6, **characterised in that** the side of the seal (5) pointing at sealing surface of (3) the machine tool table (2) together with the sealing surface (3) forms the seal between the machine tool table (5) and the channel profile (1).

8. Machine or installation according to one of the preceding claims 1 to 7, **characterised in that** the sealing surface (3) is designed in such a way that the seal (5) with the side pointing at the machine tool table (2) can be slipped on or pinned up on the sealing surface (3), and the side of the seal (5) pointing at the channel profile (1) forms the seal with a sealing surface arranged at the upper edge (1/1) .

9. Machine or installation according to one or more of the preceding claims 1 to 8, **characterised in that** the seal (5) is designed at the side pointing at the sealing surface (3) of the machine tool table (2) as circular or rectangular profile.

10. Machine or installation according to one of the preceding claims 1 to 9, **characterised in that** the seal (5) has at the side pointing at the sealing surface (3) of the machine tool table (2) additionally at least one sealing nose (5/1) or sealing lip directed at the sealing surface (3).

11. Machine or installation according to one of the preceding claims 1 to 10, **characterised in that** the seal (5) is designed at the side pointing at the sealing surface (3) of the machine tool table (2) as lip seal.

12. Machine or installation according to one of the preceding claims 1 to 11, **characterised in that** the seal (5) is designed at the side pointing at the sealing surface (3) of the machine tool table (2) as hose-like hollow profile.

13. Machine or installation according to one of the preceding claims 1 to 12, **characterised in that** the sealing surfaces (3) of the machine tool table (2) are raw, cast or worked on.

14. Machine or installation according to one of the preceding claims 1 to 13, **characterised in that** the channel profiles (1) are formed of metal, sheet metal, synthetic material or composite materials.

15. Machine or installation according to one of the preceding claims 1 to 14, **characterised in that** the channel profile (1) has at least one assembly aid device (6) by means of which the channel profile (1) can be lifted and lowered, respectively.

16. Machine or installation according to one of the preceding claims 1 to 15, **characterised in that** the assembly aid device (6) is arranged below (1/4) the channel profile (1).

17. Machine or installation according to one of the preceding claims 1 to 16, **characterised in that** the assembly aid device (6) is formed by at least one eccentric.

18. Machine or installation according to one of the preceding claims 1 to 17, **characterised in that** the assembly aid device (6) is designed in such a way that it can be attached or removed.

19. Machine or installation according to one of the preceding claims 1 to 18, **characterised in that** the assembly aid device (6) is formed by rails and/or rollers arranged below (1/4) the channel profile (1).

20. Machine or installation according to one of the preceding claims 1 to 19, **characterised in that** between the connecting side (7) of the machine tool table (2) and extensions (8) of the machine tool table (2) at least one connection member (9), in particular as part of the channel profile (1) is arranged, which has a leg (9/1) extending in the channel profile (1) which has a sealing surface (9/2) interacting with or carrying the seal (5), wherein the leg (9/1) is designed in such a way that it acts as splash protection for the seal (5).

21. Machine or installation according to one of the preceding claims 1 to 20, **characterised in that** the leg (9/1) extending in the channel profile is designed as structural part which is bent U-shaped or nose-like.

22. Machine or installation according to one of the preceding claims 1 to 21, **characterised in that** the top end (9/3) of the connection member (9) is adjusted to the shape of the machine tool table (2) and can be attached to it.

23. Machine or installation according to one of the preceding claims 1 to 22, **characterised in that** between the bevelling (10) of the upper nose of the channel or the channel profile (1) and the connection member (9) a trapezoid sealing slab (11) is arranged.

24. Machine or installation with at least one channel or channel profile (1) which is arranged in built-in condition below the machine tool table (2) in the floor or in the installation surface (13) of the machine tool table (2), according to one of the preceding claims 1 to 23, **characterised in that** between channel or channel profile (1) and machine tool table (2) at least one cover strip (14) corresponding with the shape of the cross section of the machine tool table (2) at the connection surface (2/1) or the shape of the connection (1/1) at the channel profile (1) is arranged as part of the channel profile (1).

25. Machine or installation according to claim 24, **characterised in that** the cover strip (14) carries sealing profiles (15, 16) on the side pointing at the connection surface (2/1) of the machine tool table (2) as well as on the side pointing at the channel profile (1).

26. Machine or installation according to one of the preceding claims 24 and 25, **characterised in that** the sealing profile (15) is designed at the side pointing at the machine tool table (2) as lip seal.

27. Machine or installation according to one of the preceding claims 24 and 25, **characterised in that** the sealing profile (15) is designed at the side pointing at the cover strip (14) in such a way that it can be slipped on the cover strip (14) so that it encloses the upper edge (14/1) and seals it at the same time.

28. Machine or installation according to one of the claims 24 to 27, **characterised in that** the sealing profile (16) is bent to the outside at the side pointing at the channel or the channel profile (1) seen from the channel profile (1).

29. Machine or installation according to one of the claims 24 to 28, **characterised in that** the sealing profile (16) is arranged with one side of the angle (16/1) in a recess (14/2) of the cover strip (14) non-positive and/or positive locking.

30. Machine or installation according to one of the claims 24 to 29, **characterised in that** the cover strip (14) is bent towards the inside of the channel at the side pointing at the channel or the channel profile (1) in such a way that it extends from the end of the recess bevelled and then again vertically in the interior of the channel.

31. Machine or installation according to one of the claims 24 to 30, **characterised in that** the dimensions of the cover strip (14) are adjusted to the gradient of the machine tool table (2) or the channel or the channel profile (1).

32. Machine or installation according to the preceding claims 1 to 31, **characterised in that** the sealing profiles (5, 15, 16) as sponge rubber, silicon, caoutchouc, rubber or fluorine elastomers (like Viton) are formed in particular from a material which is stable against the sealing material(s).

33. Method for mounting machines or installations according to one of the preceding claims 1 to 24 and 32, wherein below the machine tool table at least one channel profile is built in, **characterised in that** the channel profile which carries the seal at its open end or has there a sealing surface interacting with the seal is slipped in the machine tool table in such a way that the sealing surface arranged at the channel profile and interacting with the seal is spaced from the sealing surface of the machine tool table interacting with the seal that a gap remains between the seal and the sealing surface, and, after that, after the channel profile has reached its assembly position, a relative movement is carried out between the channel profile and the machine tool table in order to close the gap.

34. Method according to claim 33, **characterised by** the sequence of the following procedure steps:
- the channel profile is slipped in relatively to the sealing surface depending on the design of the upper edge of the channel profile of higher or lower level in such a way that the sealing profiles do not yet come into contact with the sealing surfaces of the machine tool table,
- the channel profile is lowered or lifted relatively to the machine tool table in such a way that the sealing profiles come into contact with the sealing surfaces of the machine tool table and create the seal.

35. Method according to one of the claims 33 and 34, **characterised by** the use of an assembly aid device by means of which the channel profile is lifted or lowered, and during the slipping-in of the channel profile it is kept in the lifted or lowered position until the end position is reached.

36. Method according to one of the claims 33 to 35, **characterised in that**
- in a first procedure step the channel profile is slipped in the openings of the machine tool table with a distance relatively to the sealing surface depending on the type of design of the sealing surface, in such a way that the sealing profile(s) do not come in contact with the sealing surfaces of the machine tool table or the channel profile, and
- in another process step the channel profile is moved with its open side after reaching the end position relatively to the machine profile vertically and/or bevelled in such a way that the sealing profile(s) come in contact with the sealing surfaces of the machine tool table or the channel profile and produce the seal.

37. Method for mounting machines or installations according to one of the claims 24 to 31, wherein below the machine tool table at least one channel profile is built in, **characterised by** the sequence of the following procedure steps:
- the gap between the channel profile and the machine tool table is covered by means of at least one cover strip,
- the cover strip(s) is/are fixed by means of fastening means attached to them and fastening means corresponding to it attached to the machine tool table.

## Revendications

1. Machine ou système comportant au moins un élément d'écoulement ou un profilé d'écoulement (1) destiné aux liquides, en particulier aux liquides de refroidissement ou de rinçage, est maintenu par une armature de machine (2) avec entre les deux un joint d'étanchéité (5) dont les surfaces d'étanchéité s'appliquent à la fois sur des surfaces du profilé et de l'armature, **caractérisé(e) en ce que** l'armature de machine (2) possède au moins une traverse (2/2) avec une surface d'étanchéité (3) comportant le joint (5) ou créant l'étanchéité avec le joint (5) et en ce que cette entretoise (2/2) protège le joint (5) de projections.

2. Machine ou système selon la revendication 1, **caractérisé(e) en ce que** l'extrémité du profilé d'écoulement (1) comporte le joint d'étanchéité (5), une surface munie d'un joint d'étanchéité ou une surface d'étanchéité.

3. Machine ou système selon une des deux revendications précédentes, **caractérisé(e) en ce que** la traverse (2/2) est configurée en tant que protection du joint (5) contre les projections de façon à ce que les surfaces d'étanchéité (3) de l'armature de machine (2) soient situées au niveau du rebord de la traverse (2/2) qui possède une ouverture vers l'extérieur en forme de U (4).

4. Machine ou système selon une des revendications précédentes 1 à 3, **caractérisé(e) en ce que** l'extrémité supérieure (1/1) du profilé d'écoulement (1) est repliée vers le bas créant ainsi un U ouvert vers le bas et comportant sur ce côté ouvert (1/2) un joint d'étanchéité (5), une surface comportant un joint d'étanchéité ou une surface d'étanchéité.

5. Machine ou système selon une des revendications précédentes 1 à 4, **caractérisé(e) en ce que** le profilé d'écoulement (1) possède au niveau de son extrémité supérieure à l'état monté une forme en U.

6. Machine ou système selon une des revendications précédentes 1 à 5, **caractérisé(e) en ce que** le joint d'étanchéité (5) possède une configuration permettant de le placer avec une extrémité sur le bord supérieur (1/1) du profilé d'écoulement (1) afin de fermer le côté ouvert (1/2) du profilé d'écoulement (1) de façon étanche.

7. Machine ou système selon une des revendications précédentes 1 à 6, **caractérisé(e) en ce que** l'autre côté du joint (5) faisant face à la surface d'étanchéité (3) de l'armature de machine (2) rend étanche la fente entre l'armature de machine (2) et le profilé d'écoulement (1) en appuyant sur cette surface d'étanchéité (3) de l'armature de machine (2).

8. Machine ou système selon une des revendications précédentes 1 à 7, **caractérisé(e) en ce que** la surface d'étanchéité (3) possède une forme telle que l'extrémité du joint (5) située du coté de l'armature de machine (2) peut être placée sur cette surface d'étanchéité (3) ou être introduite entres deux de ses parties afin de réaliser une étanchéité entre le joint (5) et la surface d'étanchéité située au niveau du bord supérieur (1/1) du profilé d'écoulement (1).

9. Machine ou système selon une des revendications précédentes 1 à 8, **caractérisé(e) en ce que l**e joint d'étanchéité (5) est arrondi ou rectangulaire sur son côté en contact avec la surface d'étanchéité (3) de l'armature de machine (2).

10. Machine ou système selon une des revendications précédentes 1 à 9, **caractérisé(e) en ce que** le joint d'étanchéité (5) possède un rebord ou une languette d'étanchéité supplémentaire (5/1) orienté vers la surface d'étanchéité (3) de l'armature de machine (2).

11. Machine ou système selon une des revendications précédentes 1 à 10, **caractérisé(e) en ce que** le joint d'étanchéité (5) forme un joint plat avec la surface d'étanchéité (3) de l'armature de machine (2).

12. Machine ou système selon une des revendications précédentes 1 à 11, **caractérisé(e) en ce que** le joint d'étanchéité (5) possède une forme de tuyau au niveau de sa partie en contact avec la surface d'étanchéité (3) de l'armature de machine (2).

13. Machine ou système selon une des revendications précédentes 1 à 12, **caractérisé(e) en ce que** les surfaces d'étanchéité (3) de l'armature de machine (2) sont brutes, c'est-à-dire telles qu'elles ont été coulées ou usinées.

14. Machine ou système selon une des revendications précédentes 1 à 13, **caractérisé(e) en ce que** les profilés (1) formant des canaux sont fabriqués à partir de métaux, de tôles, de plastique ou de matériaux composites.

15. Machine ou système selon une des revendications précédentes 1 à 14, **caractérisé(e) en ce que** le profilé d'écoulement (1) comporte au moins un dispositif d'aide au montage (6) permettant de l'abaisser ou soulever.

16. Machine ou système selon une des revendications précédentes 1 à 15, **caractérisé(e) en ce que** le dispositif d'aide au montage (6) est situé au niveau de la partie inférieure (1/4) du profilé d'écoulement (1).

17. Machine ou système selon une des revendications précédentes 1 à 16, **caractérisé(e) en ce que** le dispositif d'aide au montage (6) est constitué par au moins un excentrique.

18. Machine ou système selon une des revendications précédentes 1 à 17, **caractérisé(e) en ce que** le dispositif d'aide au montage (6) est amovible.

19. Machine ou système selon une des revendications précédentes 1 à 18, **caractérisé(e) en ce que** le dispositif d'aide au montage (6) est constitué par des rails et/ou des rouleaux situés au niveau de la partie inférieure (1/4) du profilé d'écoulement (1).

20. Machine ou système selon une des revendications précédentes 1 à 19, **caractérisé(e) en ce qu**'un élément de liaison (9) est situé entre la partie à fixer (7) et la partie de rallonge (8) de l'armature de machine (2), élément de liaison (9) faisant en particulier partie du profilé d'écoulement (1) et comportant un bord (9/1) qui rentre dans le profilé d'écoulement (1), comporte une surface d'étanchéité (9/2) agissant sur le joint (5) ou portant le joint (5) et fonctionne comme protection du joint (5) contre des projections.

21. Machine ou système selon une des revendications précédentes 1 à 20, **caractérisé(e) en ce que** le bord (9/1) orienté vers le profilé d'écoulement (1) est fabriqué comme un élément préformé, plié et ayant une forme de rebord ou de U.

22. Machine ou système selon une des revendications précédentes 1 à 21, **caractérisé(e) en ce que** l'extrémité supérieure (9/3) de l'élément de liaison (9) est adaptée à la forme de l'armature de machine (2) et peut être fixée à cette dernière.

23. Machine ou système selon une des revendications précédentes 1 à 22, **caractérisé(e) en ce qu**'une plaque d'étanchéité (11) d'une section trapézoïdale est située entre le plan incliné (10) du rebord supérieur du profilé d'écoulement (1) ou du canal même et l'élément de liaison (9).

24. Machine ou système comportant au moins un élément d'écoulement ou un profilé d'écoulement (1) situé à l'état monté sous l'armature (2) de la machine, sous sa base ou sous la surface (13) sur laquelle la machine est posée, selon une des revendications précédentes 1 à 23, **caractérisé(e) en ce qu**'une bande de recouvrement (14) faisant partie du profilé d'écoulement (1) est située entre l'écoulement ou le profilé d'écoulement (1) et l'armature de machine (2) au niveau de la surface de raccord (2/1) ou du raccord (1/1).

25. Machine ou système selon la revendication 24, **caractérisé(e) en ce que** la bande de recouvrement (14) possède des profilés d'étanchéité (15, 16) au niveau de ces deux extrémités, à savoir sur le côté faisant face au raccord (2/1) de l'armature de machine (2) et sur le coté du profilé d'écoulement (1).

26. Machine ou système selon une des revendications précédentes 24 ou 25, **caractérisé(e) en ce que** le profilé d'étanchéité (15) possède au niveau de l'armature de machine (2) une forme plate.

27. Machine ou système selon une des revendications précédentes 24 ou 25, **caractérisé(e) en ce que** le profilé d'étanchéité (15) possède à une extrémité une forme adaptée permettant de le ficher sur la bande de recouvrement (14) de façon à recouvrir de manière étanche le bord supérieur (14/1).

28. Machine ou système selon une des revendications précédentes 24 à 27, **caractérisé(e) en ce que** le bord du profilé d'étanchéité (16) faisant face à l'écoulement ou au profilé d'écoulement (1) est replié selon une direction opposée, vers l'extérieur.

29. Machine ou système selon une des revendications précédentes 24 à 28, **caractérisé(e) en ce qu'**un côté (16/1) du profilé d'étanchéité (16) est fixé dans un évidement (14/2) de la bande de recouvrement (14) de façon à ne laisser que peu de jeu et/ou à permettre le transfert de force directe.

30. Machine ou système selon une des revendications précédentes 24 à 29, **caractérisé(e) en ce que** le bord de la bande de recouvrement (14) situé à proximité de l'écoulement ou du profilé d'écoulement (1) est replié vers l'intérieur de l'écoulement d'abord de manière inclinée puis verticale vers l'écoulement.

31. Machine ou système selon une des revendications précédentes 24 à 30, **caractérisé**(**e) en ce que** les dimensions de la bande de recouvrement (14) sont adaptées à l'inclinaison de l'armature de machine (2) et de l'écoulement ou du profilé d'écoulement (1).

32. Machine ou système selon une des revendications précédentes 1 à 31, **caractérisé(e) en ce que** les profilés d'étanchéité (5, 15, 16) sont fabriqués à partir de matériaux résistants aux liquides utilisés, tels le caoutchouc mousse, la silicone, le caoutchouc, l'élastomère ou l'élastomère fluoré (le Viton).

33. Procédé de montage de machines ou de systèmes selon une des revendications précédentes 1 à 24 et 32, comportant sous leurs armatures au moins un profilé d'écoulement, **caractérisé en ce que** l'extrémité ouverte du profilé d'écoulement porte un joint d'étanchéité ou une surface agissant sur un joint d'étanchéité et **en ce que** le profilé d'écoulement est glissé à l'intérieur de l'armature de machine de façon à constituer à l'état monté une fente entre la surface d'étanchéité du profilé d'écoulement et la surface d'étanchéité de l'armature de machine, qui peut ensuite être fermée par un mouvement relatif entre le profilé d'écoulement et l'armature de machine.

34. Procédé selon la revendication 33, **caractérisé par** la séquence d'étapes de procédé suivante:
- le profilé d'écoulement est coulissé de façon à ce que les joints d'étanchéité ne viennent pas au contact de la surface d'étanchéité de l'armature de machine et ceci, en fonction de la configuration et du niveau supérieur ou inférieur du bord du profilé d'écoulement,
- le profilé d'écoulement est abaissé ou soulevé par rapport à l'armature de machine dès que sa position finale est atteinte et de façon à ce que les joints d'étanchéité viennent au contact des surfaces d'étanchéité de l'armature de machine réalisant ainsi l'étanchéité.

35. Procédé selon une des revendications 33 ou 34, **caractérisé par** l'utilisation d'un dispositif d'aide au montage permettant de soulever et d'abaisser le profilé d'écoulement et de le maintenir à un niveau élevé ou abaissé durant son introduction dans l'armature de machine jusqu'à son arrivée en position finale.

36. Procédé selon une des revendications 33 à 35, **caractérisé en ce que**:
- dans une première étape, le profilé d'écoulement est glisse dans les ouvertures de l'armature de machine de façon à ce que le ou les joint(s) d'étanchéité ne vienne(nt) pas au contact des surfaces d'étanchéité de l'armature de machine ou du profilé d'écoulement et ceci, en prenant en compte la configuration de la surface d'étanchéité et,
- **en ce qu'**en une deuxième étape, et lorsque le profilé d'écoulement a atteint sa position finale, l'extrémité ouverte de celui-ci est déplacée verticalement et/ou inclinée de façon à ce que le ou les joint(s) d'étanchéité vienne(nt) au contact des surfaces d'étanchéité de l'armature de machine ou du profilé d'écoulement réalisant ainsi l'étanchéité.

37. Procédé de montage de machines ou de systèmes selon une des revendications 24 à 31 comportant sous leurs armatures au moins un profilé d'écoulement, **caractérisé par** la séquence des étapes de procédé suivante:
- l'espace entre le profilé d'écoulement et l'armature de machine est couverte à l'aide d'au moins une bande de recouvrement,
- la ou les bande(s) de recouvrement est (sont) fixée(s) à l'armature de machine à l'aide de moyens de fixation adaptés.
